# FASCICULE DE BREVET EUROPEEN

(11) **EP 3 742 094 B1**
(45) Date de publication et mention de la délivrance du brevet: **12.11.2025**
(21) Numéro de dépôt: 20175227.6
(22) Date de dépôt: 18.05.2020
(51) Int. Cl.: F25J 3/04, F17C 13/00, E04B 1/80, F16L 59/065, F16L 59/00

(54) **ENCEINTE ISOLÉE THERMIQUEMENT CONTENANT UN ÉQUIPEMENT DEVANT FONCTIONNER À UNE TEMPÉRATURE EN DESSOUS DE 0°C**
WÄRMEISOLIERTER BEHÄLTER, DER EINE AUSSTATTUNG ENTHÄLT, DIE BEI EINER TEMPERATUR UNTER 0 °C FUNKTIONIERT
THERMALLY INSULATED ENCLOSURE CONTAINING A DEVICE TO OPERATE AT A TEMPERATURE BELOW 0°C

(30) Priorité: 22.05.2019 FR 1905376
(43) Date de publication de la demande: 25.11.2020
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: BUTLER, Maxime, 94503 Champigny sur Marne (FR); DAVIDIAN, Benoit, 94503 Champigny sur Marne (FR)
(74) Mandataire: Air Liquide

(56) Documents cités:
- EP-A1- 3 869 132
- FR-A1- 2 917 490
- JP-A- 2006 275 462
- KR-A- 20170 020 092
- US-A1- 2019 137 174
- M. S. ALLEN ET AL: "Advances in Microsphere Insulation Systems", AIP CONFERENCE PROCEEDINGS, vol. 710, 1 January 2004 (2004-01-01), NEW YORK, US, pages 619 - 626, XP055674800, ISSN: 0094-243X, DOI: 10.1063/1.1774735
- TIEN C L ET AL: "Glass microsphere cryogenic insulation", CRYOGENICS,, vol. 16, no. 10, 1 October 1976 (1976-10-01), pages 583, XP001311977

## Description

La présente invention est relative à une enceinte, isolée thermiquement contenant un équipement devant fonctionner à une température en dessous de 0°C, voire à une température cryogénique, et adapté pour effectuer un procédé de séparation à une température en dessous de 0°C par distillation et/ou lavage.

De telles enceintes sont utilisées pour isoler une colonne de distillation cryogénique. Habituellement, l'enceinte est remplie de perlite mais pour améliorer l'isolation thermique, il est connu de tirer l'enceinte remplie de perlite sous vide, pour améliorer l'isolation. La perlite sous vide est un isolant thermique performant classique utilisé dans des stockages cryogéniques ou encore des boites froides d'appareil de séparation cryogénique de gaz. L'enveloppe externe du stockage ou de la boite froide, de forme essentiellement cylindrique ou sphérique, est mécaniquement dimensionnée pour être résistante au vide, en pression inverse, ce qui nécessite une paroi épaisse couteuse et lourde.

La forme de l'enceinte sans arêtes ni coins s'impose pour améliorer la résistance à la pression extérieure. Comme noté dans FR2695714 et CN103123202A, une colonne de distillation isolée sous vide est par définition placée dans une enceinte cylindrique. Une enceinte cylindrique a généralement des fonds qui sont soit semi-sphériques soit semi-ellipsoïdaux.

Or, la forme de parallélépipède généralement utilisée quand l'isolation thermique n'est pas sous vide présente un nombre d'avantages, en particulier, plus de facilité de maintien en place pour le transport et un meilleur taux de remplissage quand un conteneur est utilisé pour le transport, ou encore quand les équipements sont des parallélépipèdes, typiquement des échangeurs de chaleur de type à plaques d'aluminium brasées.

Quand une enceinte en forme de parallélépipède est tirée au vide, les parois formant l'enceinte ne résistent pas mécaniquement au vide avec une paroi d'une faible épaisseur.

De plus, quand on utilise de la perlite sous forme pulvérulente, elle présente l'inconvénient de se tasser lors de la mise sous vide. La perlite expansée habituellement utilisée pour l'isolation thermique des enceintes présente une forme irrégulière qui peut casser quand soumise à une pression trop élevée. Selon l'art antérieur, une enveloppe externe de forme cylindrique ou sphérique est dimensionnée pour tenir mécaniquement le vide (c'est-à-dire, résister à la pression atmosphérique de 1 bara appliquée sur sa face extérieure) : cela nécessite une épaisseur de paroi conséquente, du fait de la pression inverse, parfois combiné à l'utilisation d'anneaux de renfort. Le remplissage se fait par un orifice dans l'enceinte, puis on tire au vide, puis on casse le vide en faisant pénétrer de la perlite par l'orifice. On procède ainsi à plusieurs cycles de « tirage vide - casse vide avec ajout de perlite », jusqu'à ce que la perlite soit bien tassée et que l'enveloppe externe soit bien pleine. On procède alors au tirage du vide final, typiquement autour de 10⁻¹ à 10⁻³ mbara pour assurer l'isolation thermique performante du stockage cryogénique ou de la boite froide. FR-A-2917490 décrit une enceinte selon le préambule de la revendication 1 et un procédé selon le préambule de la revendication 10 utilisant un isolant thermique classique.

Selon un objet de l'invention, il est prévu une enceinte isolée thermiquement selon la revendication 1.

Selon d'autres aspects facultatifs :
- les parois de l'enceinte ont une épaisseur insuffisante pour tenir le vide si l'isolant avait une résistance à l'écrasement telle que son volume réduirait de plus que 10%, voire 5%, le cas échéant de plus que 1%, si l'enceinte était évacuée à une pression inférieure à 10⁻¹ mbara.
- les billes sont en verre et/ou en perlite et/ou en vermiculite.
- l'enceinte a un volume minimal de 12m³.
- l'enceinte constituée par un conteneur qui est un caisson métallique parallélépipédique aux dimensions normalisées conçu pour le transport de marchandises muni à au moins un angle d'une pièce de préhension permettant de l'arrimer et de le transborder.
- l'équipement comprend ou est au moins une colonne adapté(e) pour réaliser un échange de chaleur et/ou de matière et/ou au moins un échangeur de chaleur et/ou au moins un stockage et/ou au moins un séparateur de phases.
- l'équipement est une colonne ou un échangeur de chaleur, l'équipement étant en forme de parallélépipède.

Selon un autre aspect de l'invention, il est prévu un procédé de remplissage selon la revendication 8.

De préférence on remplit l'enceinte de billes à travers une ouverture formée en enlevant une tôle formant partie d'une paroi de l'enceinte ou constituant une paroi de l'enceinte.

Selon un autre aspect de l'invention, il est prévu un procédé selon la revendication 10.

Le volume de l'ensemble formé par la multiplicité de billes réduirait d'au plus 10%, voire 5%, de préférence d'au plus 1%, si l'ensemble formé par la multiplicité de billes est soumis à une pression additionnelle de 0,1 MPa ; ceci veut dire que pour une multiplicité de billes se trouvant déjà à la pression atmosphérique, si on les soumettait à une pression additionnelle de 0,1 MPa, on constaterait tout au plus la réduction de volume revendiquée.

L'invention présente entre autres les avantages de réduire le temps et le coût de mise en place de l'enceinte isolée, de réduire la masse de l'enceinte et d'éviter des problèmes de déformation de l'enceinte.

L'invention consiste en une enceinte en forme de parallélépipède dont l'isolant thermique permet de résister à la pression atmosphérique quand elle est sous vide. Le procédé de fabrication consiste à remplir complètement l'enveloppe externe d'un matériau pulvérulent sous forme de billes sphériques ou sensiblement sphériques, de préférence par gravité. On tire ensuite au vide l'enveloppe externe.

Comme le matériau sous forme de billes sphériques n'est que peu compressible, ce matériau contient l'effort mécanique lié au vide, tout en s'appuyant sur les équipements internes de l'enveloppe externe (stockage interne, colonne à distiller, échangeur, tuyauteries, pot séparateurs, vannes, ...) sans déformation de la paroi de l'enveloppe externe : on évite aussi une déformation de l'enveloppe externe. L'enveloppe externe peut donc être simplifiée en une simple «peau» étanche qui contient le matériau pulvérulent pour maîtriser les distances d'isolation avant la mise en vide.

L'enveloppe externe étanche n'est pas dimensionnée pour résister mécaniquement au vide (c'est-à-dire résister à la pression atmosphérique de 1 bar appliquée sur sa face extérieure). Les efforts de pression vont transiter à travers l'isolation, grâce à l'utilisation d'un matériau pulvérulent peu ou pas compressible (c'est-à-dire, dont la résistance mécanique à la compression est supérieure à l'effort mécanique à transmettre), typiquement des billes de verre (par exemple, produit K1 de chez 3M ^{®}) ou de perlite, ou encore de vermiculite. Les billes utilisées ont un diamètre inférieur à 1 mm ou de préférence à 800 micromètres ou à 600 micromètres, voire à 500 ou à 120 micromètres. Les billes utilisées ont de préférence un diamètre supérieure à 10 micromètres, voire supérieure à 100 micromètres. Elles peuvent être creuses.

On remplit l'enceinte en versant les billes à travers une ouverture, l'enceinte peut être couchée ou debout. Cette ouverture peut être formée en enlevant une tôle faisant partie d'une paroi de l'enceinte ou constituant une paroi de l'enceinte, par exemple le toit. Sinon une ouverture peut être ménagée dans l'enveloppe externe de l'enceinte pour permettre d'y installer les billes. L'enveloppe externe est complètement remplie, essentiellement par gravité, de billes. On peut aussi procéder à des vibrations, ou encore taper sur la paroi, par exemple au marteau ou maillet, pour faciliter l'écoulement des billes dans toutes les zones de l'enveloppe externe, c'est à dire compris les zones moins accessibles ou « cachés » comme sous un support ou une tuyauterie, et limiter l'effet de talutage. On peut procéder à des « virages » de l'enveloppe externe de façon à remplir par gravité correctement l'ensemble du volume « vide », en la mettant dans différentes positions.

L'enveloppe externe d'épaisseur faible peut avoir une certaine rigidité pour conserver un aspect géométrique maîtrisé lors du remplissage du matériau isolant pulvérulent de façon à assurer les bonnes distances d'isolation avec les équipements internes. On peut aussi prévoir des écarteurs ou supportages locaux pour contenir dimensionnellement le matériau lors du remplissage.

Une fois remplie à ras-bord, on ferme l'enceinte. Ceci peut être fait en remettant la tôle enlevée, mentionnée plus tôt. Sinon un couvercle typiquement plan qui peut être une simple tôle soudée peut être fixée de manière étanche pardessus l'ouverture. La tôle ou le couvercle de préférence n'est pas capable de reprendre le vide (c'est-à-dire la pression atmosphérique de 1 bara) et devra donc s'appuyer sur les billes pour éviter toute déformation non acceptable lors de la mise au vide de l'enceinte, la tôle ou le couvercle faisant ainsi partie de l'enveloppe. Alternativement, le remplissage se fait par un orifice de remplissage, fermé ensuite par une bride pleine.

Une fois que l'enceinte est fermée, on peut procéder à l'unique tirage au vide final, typiquement autour de 10⁻¹ à 10⁻³ mbara pour assurer l'isolation thermique performante du stockage cryogénique ou de la boite froide, sans avoir à compléter en produit isolant et sans crainte de déformer les parois de faible épaisseur, les efforts de pression étant repris par l'isolant, tout en s'appuyant sur les équipements internes de l'enveloppe externe (stockage interne, colonne à distiller, échangeur, tuyauteries, pot séparateurs, vannes, ...).

L'ensemble de billes sphériques, remplissant l'enceinte, a une résistance à l'écrasement telle que son volume réduirait d'au plus 10%, voire 5%, de préférence d'au plus 1%, si les billes sont soumises à une pression additionnelle de 0.1 MPa, soit typiquement la pression subie si l'enceinte est tirée au vide à une pression inférieure à 10⁻¹ mbara, et dans l'hypothèse que l'enveloppe n'apporte pas de résistance mécanique.
- Pour toutes les applications, on a le gain de matière de l'enveloppe externe (épaisseur plus fine) et le gain de mise en vide avec un seul tirage au vide.
- Pour un appareil de distillation pour lequel la distillation s'effectue à au moins une température inférieure à 0°C, voire à une température cryogénique comprenant une colonne de distillation et/ou un échangeur de chaleur contenu(s) dans une boite froide parallélépipédique ou encore dans un simple conteneur, par exemple un conteneur aux dimensions normalisées rendu étanche.
- Pour un stockage cryogénique pour lequel l'intérieur du stockage est à une température inférieure à 0°C, voire à une température cryogénique où un réservoir de gaz ou de liquide est contenu dans une enceinte isolée en forme de parallélépipède pouvant être un conteneur aux dimensions normalisées.
- Un camion portant un stockage cryogénique tel que décrit ci-dessus.

L'invention sera décrite en plus de détail en se référant à la figure qui représente une enceinte selon l'invention.

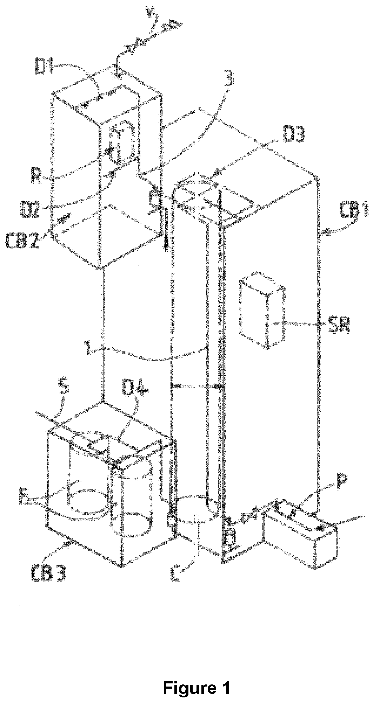

La figure 1 illustre un appareil de séparation d'air par distillation cryogénique comprenant plusieurs enceintes isolées.

Une première enceinte isolée en forme de parallélépipède CB1 contient une colonne de distillation d'air C, ici cylindrique, mais pouvant avoir d'autres géométries. L'enceinte CB1 a un volume d'au moins 12m³ et contient également un sous-refroidisseur SR et des conduites D3 qui permettent de faciliter le tirage au vide. L'espace autour des équipements de la colonne est rempli au moins au trois-quarts, de préférence entièrement rempli, d'une multiplicité de billes sphériques en matière thermiquement isolante, et éventuellement creuses, ayant une résistance à l'écrasement de préférence telle que leur volume réduirait d'au plus 10%, voire 5%, de préférence d'au plus 1%, si l'enceinte est évacuée à une pression additionnelle de 0,1 MPa.

La première enceinte CB1 est un caisson métallique parallélépipédique aux dimensions normalisées conçu pour le transport de marchandises muni à au moins un angle d'une pièce de préhension permettant de l'arrimer et de le transborder.

La première enceinte CB1 peut contenir un échangeur de chaleur principal pour refroidir l'air destiné à la colonne et un distributeur D3 qui permettent de faciliter le tirage au vide.

Une deuxième enceinte isolée CB2 contient un condenseur R et des distributeurs qui permettent de faciliter le tirage au vide D1, D2.

Une troisième enceinte isolée CB3 contient des filtres F qui filtrent un liquide provenant de la colonne C allant vers la pompe P et un distributeur D4 qui permettent de faciliter le tirage au vide.

L'appareil peut comprendre une autre enceinte isolée ne contenant que l'échangeur de chaleur principal, l'isolation étant sous forme de billes.

La colonne de distillation d'air C destiné à opérer à une pression supérieure à la pression atmosphérique, est disposée dans l'enceinte en forme de parallélépipède CB1, par exemple un conteneur à dimensions normalisées. La colonne de distillation C est rattachée à des tuyauteries pour l'alimenter en air, pour transférer d'éventuels liquides de reflux et pour transporter les produits de la distillation. L'enceinte CB1 est disposée avec une grande ouverture sur une paroi. Une paroi peut même être complètement ouverte. On remplit l'enceinte avec des billes jusqu'à ce qu'elle soit entièrement pleine et on agite l'enceinte pour compacter étroitement les billes entre elles. Les billes utilisées peuvent être, par exemple, des microsphères en verre K1 de la marque 3M ^{®}, ayant une densité de 0,125 g/cm³. On referme la paroi par exemple en soudant la paroi ou une partie de la paroi en place et on tire au vide l'enceinte jusqu'à une pression inférieure à 1 bara, typiquement une pression de moins de 10⁻¹ mbara, voire de moins de 10⁻³ mbara.

Il est possible que l'enceinte CB1 contienne d'autres isolants thermiques que les billes. Par exemple, des appareils d'instrumentation ou des supports situés dans l'enceinte peuvent être isolés par de la Durostone ^{®} Epoxy EPM203 ou une couche d'isolant peut revêtir un équipement dans l'enceinte, l'isolant thermique utilisé ayant des propriétés de compression au moins équivalentes à celles des billes. Néanmoins, les billes constitueront à elles seules au moins les trois-quarts de l'isolation en termes de volume.

Dans l'exemple, l'enceinte a une enveloppe extérieure contenant un équipement qui est par exemple une colonne. Il est également possible que l'équipement soit constitué par une boîte parallélépipédique contenant elle-même une colonne ou un échangeur de chaleur. Dans ce cas, l'espace entre la boîte parallélépipédique et l'enveloppe extérieure est remplie d'une multiplicité de billes sphériques en matière thermiquement isolante, et éventuellement creuses, ayant une résistance à l'écrasement de préférence telle que leur volume réduirait d'au plus 10%, voire 5%, de préférence d'au plus 1%, si l'ensemble formé par la multiplicité de billes est soumis à une pression additionnelle de 0,1 MPa.

L'espace entre la boîte parallélépipédique et la colonne ne contient pas d'isolation et n'est pas tirée sous vide. L'espace entre la boîte parallélépipédique et l'enveloppe extérieure est remplie en enlevant une tôle formant partie d'une paroi de l'enceinte ou constituant une paroi de l'enceinte, par exemple le toit. Sinon un couvercle peut être utilisé, comme mentionné ci-dessus.

## Revendications

1. Enceinte isolée thermiquement(CB1), contenant au moins un équipement (C, SR) devant fonctionner à une température en dessous de 0°C, voire à une température cryogénique, et adapté pour effectuer un procédé de séparation à une température en dessous de 0°C par distillation et/ou lavage, l'espace à l'intérieur de l'enceinte étant destiné à être à une pression inférieure à la pression atmosphérique et étant remplie, de préférence entièrement remplie, d'isolant thermique **caractérisée en ce qu'**elle est en forme de parallélépipède et **en ce que** , l'isolant thermique est composé pour au moins les trois-quarts de son volume, d'une multiplicité de billes sphériques en matière thermiquement isolante, et éventuellement creuses, ayant un diamètre d'au plus 1 mm et ayant une résistance à l'écrasement telle que le volume de l'ensemble formé par la multiplicité de billes réduirait d'au plus 10%, voire 5%, de préférence d'au plus 1%, si l'ensemble formé par la multiplicité de billes était soumis à une pression additionnelle de 0,1 MPa.

2. Enceinte selon la revendication 1 dont les parois ont une épaisseur insuffisante pour tenir le vide si l'isolant avait une résistance à l'écrasement telle que son volume réduirait de plus que 10%, voire 5%, le cas échéant de plus que 1%, si l'enceinte était évacuée à une pression inférieure à 10⁻¹ mbara

3. Enceinte selon l'une des revendications précédentes dans laquelle les billes sont en verre.

4. Enceinte selon l'une des revendications précédentes ayant un volume minimal de 12m³.

5. Enceinte selon une des revendications précédentes constituée par un conteneur (CB1) qui est un caisson métallique parallélépipédique aux dimensions normalisées conçu pour le transport de marchandises muni à au moins un angle d'une pièce de préhension permettant de l'arrimer et de le transborder.

6. Enceinte selon l'une des revendications précédentes dans lequel l'équipement comprend ou est au moins une colonne adapté(e) pour réaliser un échange de chaleur et/ou de matière (C) et/ou au moins un échangeur de chaleur (SR) et/ou au moins un stockage et/ou au moins un séparateur de phases.

7. Enceinte selon la revendication 6 dans lequel l'équipement est une colonne (C) ou un échangeur de chaleur (SR), l'équipement étant en forme de parallélépipède.

8. Procédé de remplissage d'une enceinte selon l'une des revendications précédentes 1 à 7 dans lequel on dispose au moins un équipement dans l'enceinte, on remplit l'enceinte (CB1) de la multiplicité de billes, on ferme l'enceinte et on évacue au moins partiellement l'espace à l'intérieur de l'enceinte, de préférence en une seule étape d'évacuation.

9. Procédé selon la revendication 8 dans lequel on remplit l'enceinte (CB1) de billes à travers une ouverture formée en enlevant une tôle formant partie d'une paroi de l'enceinte ou constituant une paroi de l'enceinte.

10. Procédé de séparation à une température en dessous de 0°C par distillation et/ou lavage utilisant une enceinte isolée thermiquement (CB1) contenant au moins un équipement (C, SR) opérant la séparation qui fonctionne à une température en dessous de 0°C, voire à une température cryogénique et à une pression de préférence super-atmosphérique l'espace à l'intérieur de l'enceinte est évacué à une pression inférieure à la pression atmosphérique de préférence inférieure à 10⁻¹ mbara.et étant rempli d'isolant thermique, **caractérisé en ce que** l'enceinte est en forme de parallélépipède, l'isolant thermique étant composé pour au moins les trois-quarts de son volume, d'une multiplicité de billes sphériques en matière thermiquement isolante, et éventuellement creuses, ayant un diamètre d'au plus 1 mm et ayant une résistance à l'écrasement telle que le volume de l'ensemble formé par la multiplicité de billes réduirait d'au plus 10%, voire 5%, de préférence d'au plus 1%, si l'ensemble formé par la multiplicité de billes est soumis à une pression additionnelle de 0,1 MPa.

## Patentansprüche

1. Ein wärmeisoliertes Gehäuse (CB1), das mindestens eine Ausrüstung (C, SR) enthält, die dazu bestimmt ist, bei einer Temperatur unter 0°C oder sogar bei einer kryogenen Temperatur zu arbeiten, und das geeignet ist, ein Trennverfahren bei einer kryogenen Temperatur durchzuführen, wobei der Raum im Inneren des Gehäuses dazu bestimmt ist, auf einem Druck unterhalb des atmosphärischen Drucks zu sein und mit einem Wärmeisolationsmaterial gefüllt, vorzugsweise vollständig gefüllt zu sein, **dadurch gekennzeichnet, dass** es die Form eines Parallelepipeds hat und dass das Wärmeisolationsmaterial zu mindestens drei Vierteln seines Volumens aus einer Vielzahl von kugelförmigen Perlen aus wärmeisolierendem Material besteht, die gegebenenfalls hohl sind, einen Durchmesser von höchstens 1 mm und eine Druckfestigkeit aufweisen, so dass das Volumen der durch die Vielzahl von Perlen gebildeten Anordnung um höchstens 10%, sogar 5%, vorzugsweise um höchstens 1% reduziert würde, wenn die durch die Vielzahl von Perlen gebildete Anordnung einem zusätzlichen Druck von 0,1 MPa ausgesetzt würde.

2. Gehäuse nach Anspruch 1, dessen Wände eine unzureichende Dicke aufweisen, um dem Vakuum standzuhalten, wenn das Isoliermaterial eine solche Druckfestigkeit hätte, dass sein Volumen um mehr als 10%, sogar 5%, gegebenenfalls um mehr als 1% reduziert würde, wenn das Gehäuse auf einen Druck von weniger als 10-1 mbara evakuiert würde.

3. Gehäuse nach einem der vorhergehenden Ansprüche, wobei die Perlen aus Glas sind.

4. Gehäuse nach einem der vorhergehenden Ansprüche, das ein Mindestvolumen von 12m³ aufweist.

5. Gehäuse nach einem der vorhergehenden Ansprüche, das aus einem Behälter (CB1) besteht, der ein metallischer parallelepipedischer Kasten mit standardisierten Abmessungen ist, der für den Transport von Waren konzipiert ist und an mindestens einer Ecke mit einem Greifstück zum Verzurren und Umladen versehen ist.

6. Gehäuse nach einem der vorhergehenden Ansprüche, wobei die Ausrüstung mindestens eine Säule, die geeignet ist, einen Wärme- und/oder Stoffaustausch (C) durchzuführen, und/oder mindestens einen Wärmetauscher (SR) und/oder mindestens einen Speicher und/oder mindestens einen Phasentrenner umfasst oder ist.

7. Gehäuse nach Anspruch 6, wobei die Ausrüstung eine Säule (C) oder ein Wärmetauscher (SR) ist, wobei die Ausrüstung die Form eines Parallelepipeds hat.

8. Verfahren zum Füllen eines Gehäuses nach einem der vorhergehenden Ansprüche 1 bis 7, bei dem mindestens eine Ausrüstung in dem Gehäuse angeordnet wird, das Gehäuse (CB1) mit der Vielzahl von Perlen gefüllt wird, das Gehäuse geschlossen wird und der Raum im Inneren des Gehäuses zumindest teilweise evakuiert wird, vorzugsweise in einem einzigen Evakuierungsschritt.

9. Verfahren nach Anspruch 8, bei dem das Gehäuse (CB1) mit Perlen durch eine Öffnung gefüllt wird, die durch Entfernen einer Platte gebildet wird, die Teil einer Wand des Gehäuses ist oder eine Wand des Gehäuses bildet.

10. Trennverfahren bei einer Temperatur unter 0°C durch Destillation und/oder Waschen unter Verwendung eines wärmeisolierten Gehäuses (CB1), das mindestens eine Ausrüstung (C, SR) enthält, die die Trennung betreibt, die bei einer Temperatur unter 0°C oder sogar bei einer kryogenen Temperatur und bei einem vorzugsweise überatmosphärischen Druck arbeitet, wobei der Raum im Inneren des Gehäuses auf einen Druck evakuiert wird, der niedriger ist als der atmosphärische Druck, vorzugsweise niedriger als 10-1 mbara, und mit Wärmeisolationsmaterial gefüllt ist, **dadurch gekennzeichnet, dass** das Gehäuse die Form eines Parallelepipeds hat, das Wärmeisolationsmaterial zu mindestens drei Vierteln seines Volumens aus einer Vielzahl von kugelförmigen Perlen aus wärmeisolierendem Material besteht, die gegebenenfalls hohl sind, einen Durchmesser von höchstens 1 mm und eine Druckfestigkeit aufweisen, so dass das Volumen der durch die Vielzahl von Perlen gebildeten Anordnung um höchstens 10%, sogar 5%, vorzugsweise um höchstens 1% reduziert würde, wenn die durch die Vielzahl von Perlen gebildete Anordnung einem zusätzlichen Druck von 0,1 MPa ausgesetzt würde.

## Claims

1. A thermally insulated enclosure (CB1) containing at least one piece of equipment (C, SR) intended to operate at a temperature below 0°C, or even at a cryogenic temperature, and adapted to carry out a separation process at a cryogenic temperature, the space inside the enclosure being intended to be at a pressure lower than atmospheric pressure and being filled, preferably completely filled, with a thermal insulation material, **characterized in that** it is in the shape of a parallelepiped and **in that**, the thermal insulation material is composed, for at least three-quarters of its volume, of a multiplicity of spherical beads of thermally insulating material, and possibly hollow, having a diameter of at most 1 mm and having a crush resistance such that the volume of the assembly formed by the multiplicity of beads would be reduced by at most 10%, or even 5%, preferably by at most 1%, if the assembly formed by the multiplicity of beads were subjected to an additional pressure of 0.1 MPa.

2. The enclosure according to claim 1, wherein the walls have an insufficient thickness to withstand a vacuum if the insulation material had a crush resistance such that its volume would be reduced by more than 10%, or even 5%, and where applicable by more than 1%, if the enclosure were evacuated to a pressure below 10-1 mbara.

3. The enclosure according to one of the preceding claims, wherein the beads are made of glass.

4. The enclosure according to one of the preceding claims having a minimum volume of 12m³.

5. The enclosure according to one of the preceding claims, constituted by a container (CB1) which is a parallelepipedal metal box with standardized dimensions designed for the transport of goods, provided at at least one corner with a gripping piece for securing and transshipping it.

6. The enclosure according to one of the preceding claims, wherein the equipment comprises or is at least one column adapted to carry out a heat and/or mass exchange (C) and/or at least one heat exchanger (SR) and/or at least one storage unit and/or at least one phase separator.

7. The enclosure according to claim 6, wherein the equipment is a column (C) or a heat exchanger (SR), the equipment being in the shape of a parallelepiped.

8. A method for filling an enclosure according to one of the preceding claims 1 to 7, wherein at least one piece of equipment is placed in the enclosure, the enclosure (CB1) is filled with the multiplicity of beads, the enclosure is closed and the space inside the enclosure is at least partially evacuated, preferably in a single evacuation step.

9. The method according to claim 8, wherein the enclosure (CB1) is filled with beads through an opening formed by removing a plate forming part of a wall of the enclosure or constituting a wall of the enclosure.

10. A separation process at a temperature below 0°C by distillation and/or washing using a thermally insulated enclosure (CB1) containing at least one piece of equipment (C, SR) operating the separation which functions at a temperature below 0°C, or even at a cryogenic temperature and at a preferably super-atmospheric pressure, the space inside the enclosure is evacuated to a pressure lower than atmospheric pressure, preferably lower than 10-1 mbara, and being filled with thermal insulation material, **characterized in that** the enclosure is in the shape of a parallelepiped, the thermal insulation material being composed for at least three-quarters of its volume, of a multiplicity of spherical beads of thermally insulating material, and possibly hollow, having a diameter of at most 1 mm and having a crush resistance such that the volume of the assembly formed by the multiplicity of beads would be reduced by at most 10%, or even 5%, preferably by at most 1%, if the assembly formed by the multiplicity of beads were subjected to an additional pressure of 0.1 MPa.
